# EUROPEAN PATENT SPECIFICATION

(11) **EP 0 908 483 B1**
(45) Date of publication and mention of the grant of the patent: **23.04.2003**
(21) Application number: 97890187.4
(22) Date of filing: 16.09.1997
(51) Int. Cl.: C08G 63/80, C08G 63/64

(54) **A process for the preparation of poly (ester-carbonate)s**
Verfahren zur Darstellung von Polyestercarbonaten
Procédé pour la préparation de polyestercarbonates

(43) Date of publication of application: 14.04.1999
(73) Proprietor: Council of Scientific and Industrial Research, New Delhi 110 001 (IN)
(72) Inventor: Hait, Sukhendu Bikash, Maharashtra (IN); Sivaram, Swaminathan, Maharashtra (IN)
(74) Representative: Schwarz, Albin, Dr.

(56) References cited:
- EP-A- 0 338 085
- EP-A- 0 481 296
- EP-A- 0 568 740
- DE-A- 2 919 629
- FR-A- 2 252 367
- US-A- 4 994 546
- US-A- 5 066 766
- US-A- 5 164 478
- DATABASE WPI Week 9423 Derwent Publications Ltd., London, GB; AN 94-186444 XP002056006 & JP 06 122 758 A (ASAHI KASEI KOGYO KK) , 6 May 1994

## Description

### FIELD OF THE INVENTION

This invention relates to a process for the preparation of Poly (ester-carbonate)s. More particularly, it relates to preparation of these poly (ester-carbonates)s by polymerization in the solid state.

### BACKGROUND OF THE INVENTION

Poly (ester-carbonate)s are a class of engineering plastics which are commericially produced by the industry and find application at high performance materials. The introduction of carbonate linkage in the matrix of a polyester has the beneficial effect of improving processability, reduicng the glass transition temperature and improving impact strength. The ester component of the poly (ester-carbonate)s can be derived either from poly (arylester) or a poly (alkylester).

### PRIOR ART REFERENCES

Poly (ester- carbonate)s can be prepared by a melt polycondensation reaction involving bisphenol-A, phenyl esters of aromatic dicarboxylic acids and diphenyl carbonate at high temperatures and low pressures in presence of a catalyst. In this process, phenol is continously distilled from the reaction to drive the process to completion. Processes of this type are described in Japan Pat. 01,247,420 (1989), Japan Pat. 8098,228 (1980) and Eur.Pat.Appl. 303,93 (1989).

Poly (arylester-carbonate)s can also be prepared by an interfacial polymerization process wherein the sodium salt of bisphenol-A is reacted with a mixture of aromatic dicarboxylic acid chlorides and phosgene in a two phase medium. consisting of water and a chlorinated solvent, such as methlene chloride. Such processes are described in Ger. Pat. 2,009,49 (1971) and by G.S. Kolensnikov et al. in Vysokomol, Soedin. Ser.B. Vol.9, p.49,1967.

Poly (alkylester-carbonate)s are conveniently prepared by a process of reactive blending, in which mixtures of respective homopolymers, namely poly(ethylene terepthalate) or poly (butylene terephthalate) are melt blended with poly(arylcarbonate) in the barrel of an extruder, in presence of suitable catalyst which can promote an ester-carbonyl interchange reaction. Such blending is best carried out in a twin-screw corotating extruder at 270-280°C. The product thus obtained are poly (alkyester-carbonate)s. This process has the advantage that it is very flexible, versatile and requires low capital investment. These types of processes are well described in the prior art (V.N.Ignatov et.al, Polymer, Vol.38, 195-200, 1997 ; T. Suzuki et.al, Polymer, Vol.30.p.1287-1297, 1989; S. Fakirov et.al, Macromol. Chem. Phys.vol.197,2837,1996).

Solid state polymerization is a process widely practised to increase the molecular weight of the low molecular weight oligomers of poly (ester)s and poly(arylcarbonate)s. In this process, oligomers are subjected to various treatment to induce crystallinity and polymerized in the solid state at a temperature higher than the glass transition temperature of the polymer but below the melting point of the polymer, either in vaccum or in presence of an inert gas flow, whereupon molecular weight increase in the solid state.

The advantage of the process is that the reation is conducted at relatively lower temperatures, without melting the oligomer or the polymer. Accordingly, no undesirable degradation reaction occurs and polymers with good physical properties are obtained. Solid state polymerization of oligomers of poly(alkylester)s, poly(arylester)s and poly (arylcarbonate)s are described in the prior art U.S. Pat.5,510,454 describes an efficient process for the thermal crystallization of poly(ethylene terephthalate) oligomers having an inherent viscosity (IV) in the range of 0.10 to 0.36 and their solid state polymerization. At 240°C, and in 24 h, the IV could increased from 0.18 to 1.14. Similarly. U.S. Patent 4,94,871 and 5,266,659 describe solid state polymerization of poly (arylcarbonate ) oligomers. U.S. Patent 4,994,546 and 5,164,478 describe solid state of polymerization of poly (arylester) oligomers which have been crystallized using a suitable non-solvent. However, in none of the above patents, which are incorporated herein as references, copolymerization of an ester and carbonate containing oligomers to form poly(ester-carbonate)s in the solid state polymerization is either disclosed or implied.

However, all the forgoing processes suffer from many disadvantages. The interfacial process uses phosgene as well as organic chlorinated solvents both of which are toxic and enviromentally polluting. In addition, in the interfacial process large amount of chloride waste as inorganic salt is formed which poses problems in disposal. The melt processes are conducted at high temperatures during which undesirable degradation of the polymer occurs. This leads to poor colour and physical properties. Furthermore, the melt processes involve handling of high viscosity melts, which lead to complicated processing equipment. The reactive process, although simple, has the disadvantage that the constituent polymers are subjected to a second thermal history. Additionally, presence of catalyst residues in the constituents polymers result in poor control of the ester-carbonate interchange reaction. Such reactive blending processes are always accompained by the formation of varible quantities of gel (crosslinked polymer) which are undesirable.

### OBJECT OF THE INVENTION

The object of the present invention is to provide an improved process for the preparation of wide range of poly (ester-carbonate)s which obviates many of the disadvantages of the hithero known processes and to provide a product with good physical properties, avoiding the use of toxic and non environment friendly chemicals.

### SUMAMRY OF THE INVENTION

The above objects are acheived by providing a process for the preparation of poly (ester-carbonate)s, from the corresponding oligomers, using solid state polymerization process, which comprises mixing the desired oligomers in a suitable nonsolvent,adding a suitable catalyst to this mixture, refluxing the mixture for a period of 1 to 8 hours, removing the non solvent by known methods, polymerizing the oligomer mixture in the solid state, either in presence of vaccum or under a flow of inert gas a temperature between 180 to 240°C for a period of 5 to 20 hours to obtain the product.

### DETAILED DESCRIPTION

Accordingly, the present invention provides an improved process for the preparation of poly (ester-carbonate)s, from the corresponding oligomers, using solid state polymerization process, which comprises mixing the desired oligomers in a suitable nonsolvent,adding a suitable catalyst to this mixture, refluxing the mixture for a period of 1 to 8 hours, removing the nonsolvent by conventional methods, polymerizing the oligomer mixture in the solid state, either in presence of vaccum or under a flow of inert gas a temperature between 180 to 240°C for a period of 5 to 20 hours to obtain poly (ester-carbonate)s.

In an embodiment of the present invention, the oligomers used may be selected from Poly (aryl carbonate)s, Poly (aryl ester)s, Poly(alkyl ester)s exemplified by bisphenol-A polycarbonate, bisphenol-A polyesters, poly (ethylene terephthalate), poly (butylene terephthalate) and poly (ethylene 2, 6-naphthalate).

In another embodiment, the non-solvent used may be selected from ketones such as acetone and methyl ethyl ketone, esters such as ethyl acetate and butyl acetate, aromatic hydrocarbons such as toluene, xylene and cholrobenzene. The non solvent used in the present reaction is removed by any known methods and a person having average skilled will not have any difficulty in doing this step.

In yet another embodiment, the catalyst used may be selected from the oxides of antimony, lead, or germanium, alkoxides and aryloxides of Group IV metals, alkoxides of Lanthanide Group of metals, and alkoxides and esters of tin.

In one another embodiment, the oligomers has an inherent viscosity (IV) values between 0.10 to 0.40 dL/g, preferably 0.20 to 0.30 dL/g as measured in cholroform at 30°C or in 60:40 phenol-tetrachloroethane at 30°C.

In still another embodiment, the oligomers have an hydroxyl content in the range 30-80 % perferably 30 to 70 % but not less than 30 %.

In another embodiment, the amount of catalyst may be in the range of 15 to 2000 ppm.

In another embodiment, the inert gas used may be selected from nitrogen, argon or carbon dioxide.

In a feature of the present invention, the oligomer suitable for solid state polymerization may be prepared by a number of methods which are well documented in the prior art. poly (alkylester)s can be prepared by the melt phase reaction of either aromatic dicarboxylic acid of their dialkl (ester)s with aliphatic or alicyclic diols (F. Pilati in G. Allen et.al, Ed., Comprehensive Polymer Science, Vol.5, p.201-216, Pergamon Press, Oxford 1989). Suitable aromatic dicarboxylic acids are those derived from terephthalic acid, isophthalic acid and 2,6-naphthalenedicarboxylic acid. diols can be chosen amongst ethylene glycol. 1,3-propylene glycol, 1,4-butane diol and 1,4-cyclohexanedimethanol. Poly(arlycarbonate) oligomers can be prepared by a melt phase reaction of bisphenol-A with diphenyl carbonate (U.S.Pat. 5,288,838). Poly (arylester) oligomers can be prepared by a melt phase reaction of bisphenol-A with phenyl or methyl esters of terephthalic acid/isophthalic acids. Such processes have been described in the prior art(U.S. Pat. 5,340,908).

In the case of poly (arylcarbonate)s and poly (arylester)s , the bisphenol-A can be replaced partially or wholly, by other aromatic dilhydric phenols. Examples of other aromatic dihydric phenols are hydroquinone, 4,4'-dihydroxybiphenyl, 4,4'-dihydroxydiphenyl ether, 4,4'-dihydroxydiphenyl sulfoxide, 4,4'-dihydroxy-3,3'-dimethyldiphenyl and 4,4'-dihydroxydiphenyl sulfone.

The oligomers of poly (arylcarbonate) and poly (arylester) or poly (alkylester). can be mixed in any proportion, ranging between 0-100 wt %. Generally, the composition of the final poly (ester-carbonate) is determined by the composition of the oligomer used in the solid state polymerization. Thus, a 50 wt% composition of poly (arylcarbonate) oligomer and poly (arylester) or poly (alkylester) oligomer will result in a poly ( ester-carbonate) wherein the relative proportion of ester to carbonate linkage is 50:50 wt%. the oligomers are physically mixed and slurried in a non-solvent. Suitable non-solvents are ketones such as acetone and methyl ethyl ketone, esters such asethyl acetate and butyl acetate, aromatic hydrocarbons such as toluene, xylene, and chlorobenzene. Optionally the solvents containing the mixture of oligomers can be heated to a temperature range of 40-120°C, preferably between 40-60°C for a period of 1-8 hours, preferably 1-4 hours. These solvents are known in the prior art to induce some crystallinity to oligomers of poly (arylcarbonate)s, poly (arylester)s and poly (alkylester)s.

In another feature, it is often necessary to use a catalyst to accelerate the solid state polymerization process. Such catalysts are selected from a wide range of materials, well known as catalyst for the melt polymerization of these class of polymers. These catalyst can be chosen from amongst the following : oxides of antimony, lead, or germanium, alkoxides and aryl oxides of Group IV metals, alkoxides of Lanthanide Group of metals, and alkoxides and esters of tin. The catalyst concentration is typically between 15 ppm to 2000 ppm, preferably between 25-1000 ppm. The catalyst can be conveniently dispersed with the oligomer by adding it to the slurry of the oligomers in the non-solvents.

In yet another feature of the present invention, the non-solvent can be distilled to generate solid oligomer powder. The distilled non-solvent can be reused in the process.

The oligomeric mixture in the form of a dry and containing the catalyst is now suitable for use in solid state polymerization.

Solid state polymerization can be conducted by any of the prior art methods. For example the mixture of oligomers can be subjected to programmed increase of temperature from 180-230°C, either under a flow of inert gas or a vaccum. Any inert gas such as N₂ argon or carbon dioxide can be used. A vaccum ranging from 100 mm to 1 mmHg is suitable. Typically, the powder is maintained at 180°C for 1 to 2 hours followed by heating at 200°C for 1 to 4 hours and 220°C for 1 to 4 hours and 230°C for I to 10 hours. The temperature and time profile determine the reaction rate as well as the final molecular weight of the poly (ester carbonate). At no point of time during solid state copolymerization process, the powders melt or undergo fusion.

The major advantages of the solid state polymerization process is that it involves relatively low temperatures, is solvent free and produces no effluents. There is no need for special equipments to handle the higher viscosities of the polymer encountered in the melt process. in view of the low temperatures used, there is no undesirable polymer degradation leading to loss of properties. The process is surprisingly free of gelation or crosslinking.

The products of solid state copolymerization are poly (ester-carbonate)s with high molecular weights as characterised by inherent viscosity values of 0.50 to 1.0 dL/g. The increase in polymer molecular weight is accompanied by interchange reactions, amongst the oligomers used as starting material. This is evidence by thermal analytical measurements and nuclear magnetic resonance spectroscopy of the resultant poly (ester-carbonate)s. The relative weight proportion of ester to carbonate in the product namely poly (ester-carbonate) is determined by relative wt% of poly (arylcarbonate) and poly (arylester) or poly (alkylester) oligomer in the feed to the solid state polymerization reaction.

The process of the present invention is described by the examples given below which are illustrative only and should not be construed to limit the scope of the present invention in any manner.

### Example 1

Poly (arylcarbonate) oligomer, IV = 0.17 dL/g (6g) and poly (ethylene terephthalate) oligomer, IV = 0.14 dL/g (6g) were taken in a 100 mL round bottom flask slurried in ketone (50 mL) containing antimony trioxide (1000 ppm) as catalyst and refluxed for 4 h. Acetone was evaporated and the oligomer mixture was dried under vaccum at 60°C for 4 h. The oligomer mixture had an inherent viscosity of 0.14dL/g, T_{g} = 71°C and Tₘ = 220 and 247°C.

The solid state copolymerization reaction of the oligomer mixture was performed in a glass reactor, immersed in an oil bath. Nitrogen was bubbled through the bed of powder at 2 L/min. The oligomer mixture (3g) was placed in the reactor and was heated slowly from room temperature to 180°C over a period of 1 h and maintained at 180°C for an additional period of 1 h. Thereafter, the temperature was increased to 200°C/3h, 220°C/4 h. The final, poly (ethylene terephthalate-carbonate) showed IV = 0.71 dL/g, T_{g} = 93°C and Tₘ = 245°C.

### Example 2

Poly (arylcarbonate) oligomer,(IV = 0.17 dL/g) 6g and poly (ethylen terephthalate) oligomer, (IV = 0.14 dL/g) 6 g were taken in a 100 mL round bottom flask was slurried in acetone (50mL) containing antimony trioxide (1000 ppm) and refluxed for 4 h. Acetone was evaporated and the oligomerr dried under vaccum at 60°C for 4 h. The mixture of the oligomers thus obtained showed an IV = 0.14 dL/g. T_{g} = 71°C and Tₘ = 215 and 247°C.

The solid state copolymerization reaction of the oligomer mixture was performed in a glass reactor, immersed in an oil bath. Nitrogen was bubbled through the bed of powder at 2 L/min. The oligomer mixture (3g) was placed in the reactor and was heated slowly from room temperature to 180°C over a period of 1 h and maintained at 180°C for an additional period of 1 h. Thereafter, the temperature was increased to 200°C (3h), 220°C (4 h) and 230°C (7 h). The inherent viscosity of the poly (ethylene terephthalate-carbonate) was 0.84 dL/g, T_{g} = 95°C and Tₘ = 248°C.

### Example 3

Poly (arylcarbonate) oligomer, (IV = 0.44 dL/g) 6g and poly (ethylene terephthalate) oligomer, (IV = 0.65 dL/g) 6 g were taken in a 100 mL round bottom flask was slurried in acetone (50mL) containing dibutyltin dilaurate (100 ppm) and refluxed for 4 h. Acetone was evaporated and the oligomer dried under vaccum at 60°C for 4 h. The mixture of the oligomers thus obtained showed an IV = 0.55dL/g, Tg = 89 and 136°C and Tₘ = 219 and 252°C.

The solid state copolymerization reaction of the oligomer mixture was performed in a glass reactor, immersed in an oil bath. Nitrogen was bubbled through the bed of powder at 2 L/min. The oligomer mixture (3g) was placed in the reactor and was heated slowly from room temperature to 180°C over a period of h and maintained at 180°C for an additional period of 1 h. Thereafter, the temperature was increased to 200°C (4 h), 210°C (4 h), 215°C (2 h), 220°C (2 h), 225°C (2 h) and 230°C (7 h). The inherent viscosity of the poly (ethylene terephthalate-carbonate) was 0.93 dL/g, T_{g} = 103°C and Tₘ = 238°C.

### Example 4

Poly (arylcarbonate) oligomer, (IV = 0.17 dL/g) 6g and poly (ethylene terephthalate) oligomer, (IV = 0.17 dL/g) 6 g were taken in a 100 mL round bottom flask was slurried in acetone (50mL) containing titanium isopropoxide (100 ppm) and refluxed for 4 h. Acetone was evaporated and the oligomer dried under vaccum at 60°C for 4 h. The mixture of the oligomers thus obtained showed an IV = 0.17 dL/g T_{g} = 69 and 136°C and Tₘ = 209 and 241°C.

The solid state copolymerization reaction of the oligomer mixture was performed in a glass reactor, immersed in an oil bath. Nitrogen was bubbled through the bed of powder at 2 L/min. The oligomer mixture (3g) was placed in the reactor and was heated slowly from room temperature to 180°C over a period of 1 h and maintained at 180°C for an additional period of 1 h. Thereafter, the temperature was increased to 210°C (4 h), 220°C (4 h).The inherent viscosity of the poly (ethylene terephthalate-carbonate) was 0.70 dL/g, T_{g} = 103°C and Tₘ = 238°C.

### Example 5

Poly (arylcarbonate) oligomer, (IV = 0.17 dL/g) 6g and poly (ethylene terephthalate) oligomer, (IV = 0.17 dL/g) 6 g were taken in a 100 mL round bottom flask was slurried in acetone (50mL) containing titanium isopropoxide (100 ppm) and refluxed for 4 h. Acetone was evaporated and the oligomer dried under vaccum at 60°C for 4 h. The mixture of the oligomers thus obtained showed an ηᵢₙₕ = 0.17dL/g, T_{g} = 69 and 136°C and Tₘ = 209 and 241°C.

The solid state copolymerization reaction of the oligomer mixture was performed in a glass reactor, immersed in an oil bath. Nitrogen was bubbled through the bed of powder at 2 L/min. The oligomer mixture (3g) was placed in the reactor and was heated slowly from room temperature to 180°C over a period of 1 h and maintained at 180°C for an additional period of 1 h. Thereafter, the temperature was increased to 210°C (4 h),220°C (4 h) and 230°C (6 h) . The inherent viscosity of the poly (ethylene terephthalate-carbonate) was 0.99 dL/g, T_{g} = 103°C and Tₘ = 239°C.

### Example 6

An oligomer of poly (aryl carbonate) (IV = 0.17dL/g) (6 g) and poly (arylester) (IV = 0.19 dL/g) (6 g) was slurried in ethyl acetate (50 mL) containing 100 ppm dibutyltin dilaurate. The slurry was refluxed for 4 h. Ethyl acetate was evaporated and the oilgomers mixture was dried under vaccum at 60°C for 4 h., the mixture of the oligomers thus obtained showed an IV = 0.18dL/g, T_{g} = 130°C and Tₘ =210°C.

The solid state copolymerization reaction of the oligomer mixture was performed in a glass reactor, immersed in an oil bath maintained at a constant temperature (3g) of the crystallized oligomer mixture was placed in the reactor, the pressure was reduced to 0.1 mm of Hg and was heated slowly from room temperature to 180°C over a period of 1 h and the sample was then retained at 180°C for 1 h. Further, reation was performed at 200°C (1 h), 210°C (4 h) and 220°C (4 h). The final poly (ethylene terephthalate-carbonate) showed an 0.43 dL/g with T_{g} = 159°C and Tₘ = 233°C.

### Example 7

An oligomer of poly (aryl carbonate) (IV = 0.17dL/g) (6 g) and poly (arylester) (IV = 0.19 dL/g) (6 g) was slurried in ethyl acetate (50 mL) containing 100 ppm dibutyltin dilaurate. The slurry was refluxed for 4 h. Ethyl acetate was evaporated and the oilgomers mixture was dried under vaccum at 60°C for 4 h., the mixture of the oligomers thus obtained showed an IV = 0.18dL/g , T_{g} = 130°C and Tₘ =210°C.

The solid state copolymerization reaction of the oligomer mixture was performed in a glass reactor, immersed in an oil bath maintained at a constant temperature (3g) of the crystallized oligomer mixture was placed in the reactor, the pressure was reduced to 0.1 mm of Hg and was heated slowly from room temperature to 180°C over a period of 1 h and the sample was then retained at 180°C for 1 h. Further, reation was performed at 200°C (1 h), 210°C (4 h) and 220°C (4 h) and finally at 230°C for (2 h). The final poly (ethylene terephthalate-carbonate) showed an 0.52 dL/g, with T_{g} = 163°C and Tₘ = 243°C.

## Claims

1. A process for the preparation of poly (ester-carbonate)s from the corresponding oligomers, using solid state polymerization process, which comprises mixing the desired oligomers in a suitable non-solvent, adding a suitable catalyst to this mixture refluxing the mixture for a period of 1 to 8 hours, removing the non-solvent by known methods, polymerizing the oligomer mixture in the solid state either in presence of vacuum or under a flow of inert gas at a temperature ranging between 180-240° C for a period of 5 to 20 hours to obtain the required product.

2. A process as claimed in claim 1, wherein the oligomers used is selected from poly (aryl carbonate)s, poly (arylester)s, poly (alkylester)s exemplified by bispshenol-A polycarbonate, bisphenol-A polyesters and poly (ethylene terephthalate), poly (butylene terephthalate) and poly (ethylen 2,6-naphthalate).

3. A process as claimed in claim 1, wherein the non-solvent used is selected from ketones such as acetone and methyl ethyl ketone, esters such as ethyl acetate and butyl acetate, aromatic hydrocarbons such as toluene, xylene, and cholrobenzene.

4. A process as claimed in claim 1, wherein the catalyst used is selected from the oxides of antimony, lead or germanium, alkoxides and aryl oxides of Group IV metals, alkoxides of Lanthanide Group of metals and alkoxides and esters of tin.

5. A process as claimed in claim 1, wherein the amount of catalyst used is in the range of 15 to 2000 ppm.

6. A process as claimed in claim 1, wherein the oligomers have an inherent viscosity (IV) value between 0.10 to 0.40 dL/g, preferably 0.20 to 0.30 dL/g as measured in chloroform at 30°C or in 60:40 phenol-tetrachloroethane at 30°C.

7. A process as claimed in claim 1, wherein the oligomers have a hydroxyl content in the range 30-80%, Preferably 30 to 70 but not less than 30%.

8. A process as claimed in claim 1, where the inert gas used is nitrogen, argon or carbon dioxide.

## Patentansprüche

1. Verfahren zur Herstellung von Poly(estercarbonat)en aus den entsprechenden Oligomeren unter Anwendung des Festphasenpolymerisationsverfahrens, welches das Mischen der gewünschten Oligomere in einem geeigneten Nichtlösungsmittel, das Hinzugeben eines geeigneten Katalysators zu dieser Mischung, das Refluxieren der Mischung für einen Zeitraum von 1 bis 8 Stunden, das Entfernen des Nichtlösungsmittels mittels bekannter Verfahren und das Polymerisieren der Oligomermischung im Festkörperzustand entweder in Gegenwart eines Vakuums oder unter einem Inertgasfluss bei einer zwischen 180 und 240°C liegenden Temperatur für einen Zeitraum von 5 bis 20 Stunden umfasst, um das gewünschte Produkt zu erhalten.

2. Verfahren, wie im Anspruch 1 beansprucht, wobei die verwendeten Oligomere ausgewählt sind aus Poly(arylcarbonat)en, Poly(arylester)n, Poly(alkylester)n, die durch Bisphenol-A-Polycarbonat, Bisphenol-A-Polyester und Poly(ethylenterephthalat), Poly(butylenterephthalat) und Poly(ethylen-2,6-naphthalat) beispielhaft veranschaulicht werden.

3. Verfahren, wie im Anspruch 1 beansprucht, wobei das verwendete Nichtlösungsmittel ausgewählt ist aus Ketonen, wie z.B. Aceton und Methylethylketon, Estern, wie z.B. Ethylacetat und Butylacetat, aromatischen Kohlenwasserstoffen, wie z.B. Toluol, Xylen und Chlorbenzol.

4. Verfahren, wie im Anspruch 1 beansprucht, wobei der verwendete Katalysator ausgewählt ist aus den Antimon-, Blei- oder Germaniumoxiden, Alkoxiden und Aryloxiden von Gruppe-IV-Metallen, Alkoxiden der Lanthanoidmetallgruppe und Alkoxiden und Estern von Zinn.

5. Verfahren, wie im Anspruch 1 beansprucht, wobei die Menge an verwendetem Katalysator im Bereich von 15 bis 2000 ppm liegt.

6. Verfahren, wie im Anspruch 1 beansprucht, wobei die Oligomere einen Eigenviskositäts(IV)-Wert zwischen 0,10 und 0,40 dl/g, vorzugsweise 0,20 bis 0,30 dl/g, haben, wie bei 30°C in Chloroform oder bei 30°C in 60:40 Phenol-Tetrachlorethan gemessen.

7. Verfahren, wie im Anspruch 1 beansprucht, wobei die Oligomere einen Hydroxylanteil im Bereich von 30 bis 80%, vorzugsweise 30 bis 70, aber nicht weniger als 30%, haben.

8. Verfahren, wie im Anspruch 1 beansprucht, wobei das eingesetzte Inertgas Stickstoff, Argon oder Kohlendioxid ist.

## Revendications

1. Procédé pour la préparation de polyestercarbonates à partir des oligomères correspondants, en utilisant un procédé de polymérisation à l'état solide, qui consiste à mélanger les oligomères souhaités dans un non-solvant adéquat, à ajouter un catalyseur adéquat à ce mélange en chauffant le mélange à reflux pendant une durée de 1 à 8 heures, à éliminer le non-solvant à l'aide de procédés connus, à polymériser le mélange d'oligomères dans l'état solide, soit en présence de vide, soit sous un écoulement de gaz inerte à une température étant comprise entre 180°C et 240°C pendant une durée de 5 à 20 heures pour obtenir le produit requis.

2. Procédé selon la revendication 1, dans lequel les oligomères utilisés sont choisis parmi des polyarylcarbonates, des polyarylesters, des polyalkylesters donnés à titre d'exemple par le polycarbonate de bisphénol A, les polyesters de bisphénol A et le poly(téréphtalate d'éthylène), le poly(téréphtalate de butylène) et le poly-(2,6-naphtalate d'éthylène).

3. Procédé selon la revendication 1, dans lequel le non-solvant utilisé est choisi parmi des cétones telles que l'acétone et la méthyléthylcétone, des esters tels que l'acétate d'éthyle et l'acétate de butyle, des hydrocarbures aromatiques tels que le toluène, le xylène, et le chlorobenzène.

4. Procédé selon la revendication 1, dans lequel le catalyseur utilisé est choisi parmi les oxydes d'antimoine, de plomb ou de germanium, les alcoolates et oxydes d'aryle des métaux du Groupe IV, les alcoolates des métaux du Groupe des lanthanides et les alcoolates et esters de l'étain.

5. Procédé selon la revendication 1, dans lequel la quantité de catalyseur utilisé est dans la gamme de 15 à 2 000 ppm.

6. Procédé selon la revendication 1, dans lequel les oligomères possèdent une valeur de viscosité inhérente (IV) comprise entre 0,10 et 0,40 dl/g, de préférence 0,20 et 0,30 dl/g telle que mesurée dans du chloroforme à 30°C ou bien dans du phénol/tétrachloroéthane 60:40 à 30°C.

7. Procédé selon la revendication 1, dans lequel les oligomères possèdent une teneur en hydroxyle dans la gamme de 30 à 80 %, de préférence de 30 à 70 % mais pas inférieure à 30 %.

8. Procédé selon la revendication 1, où le gaz inerte utilisé est l'azote, l'argon ou le dioxyde de carbone.
